# EUROPEAN PATENT SPECIFICATION

(11) **EP 2 999 054 B1**
(45) Date of publication and mention of the grant of the patent: **19.07.2017**
(21) Application number: 14306459.0
(22) Date of filing: 22.09.2014
(51) Int. Cl.: H01R 4/36, H01R 4/62, F16B 31/00, F16B 31/02, F16B 35/00

(54) **Binding screw for a wire connection assembly and wire connection assembly**
Klemmschraube für eine Drahtverbindungsanordnung und Drahtverbindungsanordnung
Vis de liaison pour un ensemble de connexion de fil et ensemble de connexion de fil

(43) Date of publication of application: 23.03.2016
(73) Proprietor: Tyco Electronics Simel S.A.S., 21220 Gevrey-Chambertin (FR)
(72) Inventor: Peltier, Bruno, 21850 St. Apollinaire (FR); Monamy, Christophe, 21200 Beaune (FR)
(74) Representative: Grünecker Patent- und Rechtsanwälte PartG mbB

(56) References cited:
- EP-A1- 2 226 899
- EP-A2- 0 250 907
- DE-A1- 10 309 004
- GB-A- 2 367 957
- US-B1- 6 338 658

## Description

The invention is related to a binding screw for a wire connection assembly such as a splice connector or a lug, especially for connecting flexible aluminum wires, comprising along a central axis of the binding screw a driving section, a threaded section and a contact section for establishing contact with a wire wherein the contact section has a tapered penetration portion, wherein a length of the tapered penetration portion is at least as large as % of a diameter of the binding screw in the threaded section. The tapered penetration portion has a first conical section with an angle between a surface line of the first conical section and the central axis being less than 30°, and a second conical section which is arranged between the first conical section and the threaded section. The invention is further related to a wire connection assembly for stranded wires, especially for flexible aluminum wires, comprising a connector body with at least one wire receiving chamber and at least one bore for a binding screw, the bore being internally threaded and being opened into the wire receiving chamber, further comprising one binding screw for the at least one bore.

Binding screws and wire connection assemblies are known from the prior art. They are usually used when stranded wires in power distribution networks or long distance power transmission systems have to be connected or spliced. The wire connection assemblies generally comprise a wire receiving chamber, in which a stranded wire can be inserted. At least one binding screw is inserted in a bore which extends perpendicular to the stranded wire in a connector body of the wire connection assembly. Insertion of the screw into the wire receiving chamber leads to a compression of the wire in the chamber and therefore to an electrical contact between inner walls of the receiving chamber, the stranded wire and the binding screw. Further, the stranded wire is fixated in the wire receiving chamber so that a solid connection can be established. A known type of a binding screw is, for example, shown in DE 103 09 004 A1.

Due to weight reduction requirements and/or as a response to increasing commodity prices, more and more stranded aluminum wires are used instead of copper wires. However, using the known binding screws and/or the known wire connection assemblies for stranded aluminum wires has several disadvantages. One disadvantage is that a stranded aluminum wire easily gets damaged upon insertion of a binding screw, since the known binding screws may drill holes into the soft aluminum material. Another disadvantage is the weak electrical contact between standard binding screws, connector bodies, and stranded aluminum wires. It is known that each strand of an aluminum wire is rapidly covered by an aluminum oxide layer during exposure to air. The known wire connection assemblies do not improve the electrical contact between the single strands and between the stranded wire and the binding screw during insertion of the binding screw.

It is therefore an object of the present invention, to provide a binding screw and a wire connection assembly which provide a good electrical contact at least between the binding screw and a stranded wire, and, at the same time, decrease the risk of damaging a stranded wire during insertion of the binding screw.

The binding screw according to the invention thus provides a contact section which is capable of penetrating into a stranded wire during insertion of the screw into a connector body. Instead of pressing the strands along an insertion direction, the binding screw penetrates the stranded wire so that the strands are displaced by the tapered penetration portion mostly perpendicular to the insertion direction. Therefore, the risk of damaging the strands is reduced. Further, since the length of the tapered penetration portion is at least as large as ¾ of the diameter of the binding screw in the threaded section, the binding screw provides a contact section with a large contact area between the binding screw and the wires. The displacement of the wires leads to a movement of most of the single strands and therefore to friction between neighboring strands. An aluminum oxide layer on the strands can be removed or at least weakened by this movement. Another advantage of the binding screw according to the invention is that a stranded wire can be securely fixated by the binding screw since the tapered penetration portion penetrates into the stranded wire and therefore establishes a positive fit between the binding screw and the stranded wire. The invention is especially advantageous for flexible conductors according to IEC 60228 class 5.

For the wire connection assembly as mentioned in the beginning, the object of the present invention is achieved in that the at least one binding screw of the assembly is formed according to a binding screw according to the invention.

In the following, further improvements of the invention are described. The additional improvements may be combined independently of each other, depending on whether a particular advantage of a particular improvement is needed in a specific application.

According to a first advantageous improvement, the length of the tapered penetration portion may be at least as large as the diameter of the screw in the threaded section. This improvement can lead to a very sharp pointed tapered penetration portion with a large contact area between the binding screw and the strands. Further, this proportion can improve the displacement of strands by the tapered penetration portion.

The tapered penetration portion can be formed in such a way, that an angle between a surface line of the tapered penetration portion and a line perpendicular to the central axis is larger than an angle of friction of the strands in contact with the tapered penetration portion. This improvement can lead to an easy displacement of the strands by the binding screw.

The tapered penetration portion having a first conical section according to the invention may be advantageous in order to provide a contact section which can easily be formed on a binding screw. In order to provide a conical section which leads to a long tapered penetration portion, the angle can be less than 25°, most preferably 22°.

The second conical section preferably has an angle between a surface line of the second conical section and the central axis being larger than the angle between a surface line of the first conical section and the central axis. This design allows the positioning of the threaded section closer to a tip of the contact section compared to a design in which the first conical section extends until the immediate vicinity of the threaded section. A design in which the threaded section is close to the tip of the tapered penetration portion can be advantageous when it is desired to preinstall binding screws in a connector body before a stranded wire is inserted into the connector body. During insertion of a stranded wire, it is desired to be able to insert the stranded wire unhindered by elements in a wire receiving chamber. The second conical section as mentioned above, allows the screw to be pre-inserted in a bore of a connector body without the contact section of the screw entering too far into the wire receiving chamber.

According to another advantageous improvement of the binding screw, the binding screw can be formed as a shear bolt with a shear element between the driving section and the threaded section. The shear element allows the driving section to break away when a required minimum moment of force is applied on the driving section of the binding screw. The dimension of the shear element can be chosen in order to adjust the moment of force at which the driving section is removed from the screw. Removing the driving section by this shearing feature can be advantageous, when it is desired to protect an inserted binding screw from being removed after the stranded wire was fixated. Further, removing the parts of the screw, which might extend out of a connector body after insertion of the screw can be helpful when it is intended to apply insulation means around the connector body after a stranded wire has been fixated in it.

The shear element can have a third conical section with a lower diameter end facing towards the threaded section and a cylindrical section between said conical section and the threaded section. In this case, the cylindrical section will be a pre-determined breaking point. The definition of a breaking point is helpful for defining the dimensions of the part of the binding screw which will remain in the connector body.

The wire connection assembly according to the invention can further be improved in that the length of the tapered penetration portion is at least as large as 2/3 of an inner diameter of the wire receiving chamber. This allows the tapered penetration portion to penetrate deeply into an inserted stranded wire and to displace a large portion of the single strands inside the wire receiving chamber.

The length of the tapered penetration portion is preferably at least as large as ¾ of the inner diameter of the wire receiving chamber. This can allow the binding screw to penetrate with its tapered penetration portion through the whole or at least through most of the stranded wire and displace all or most of the single strands so that they are arranged between the contact section and inner walls of the wire receiving chamber. Preferably, the strands are arranged in an area which is bordered by a tapered penetration portion and inner walls of the wire receiving chamber. In a preferred embodiment, the threaded section does not enter the wire receiving chamber in order to avoid damages to the strands from the threads.

In an inserted position of the at least one binding screw, the binding screw may extend over at least ¾ of the diameter of the wire receiving chamber into the same. More preferably, the binding screw extends over 100% of the diameter of the wire receiving chamber into the same. This means, that the end of the tapered penetration portion which points in the insertion direction is aligned with an inner wall of the wire receiving chamber in a cross section in parallel with the central axis of the screw. This deep penetration of the binding screw into the wire receiving chamber allows the contact section to displace most of the strands during insertion and therefore to remove as much of the aluminum oxide layers from the strands as possible. Further, the deep penetration of the binding screw into the stranded wire leads to a good fixation of the stranded wire in the wire receiving chamber.

In order to insert the binding screw even deeper into the wire receiving chamber as described above, an extension opening for receiving the tapered penetration portion at least in parts can be arranged in an inner wall of the wire receiving chamber opposite to the bore of said binding screw. Such deep penetration of the binding screw can be helpful when a stranded wire is inserted that is having a smaller cross section compared to a stranded wire which can be connected with the wire connection assembly without the extension opening. Even with a stranded wire with a small cross section, the binding screw can still displace the strands and press them against inner walls of the wire receiving chamber because the binding screw can penetrate into the wire receiving chamber further than the inner wall opposite to the bore. With this advantageous feature, the same wire connection assembly can be used for a variety of wire sizes. Furthermore, there is no need for inserts which can be placed inside the wire receiving chamber when a stranded wire with a small cross section is to be connected.

In order to avoid air and debris to get through the extension opening into the wire receiving chamber, the extension opening can be formed as a blind hole. Since the extension opening is arranged in the inner wall of the wire receiving chamber, the blind hole extends from the inner wall of the wire receiving chamber into the connector body along a central axis of the binding screw bore.

The inner diameter of the wire receiving chamber may be larger than the bore. This is advantageous in order to provide space for the strands to be displaced by the binding screw.

In order to improve the electrical contact between the contact section of the binding screw and the strands, a reducing agent may be provided on a surface of the contact section of the binding screw. The reducing agent is then automatically applied on the strands during insertion of the binding screw. Upon displacement of the strands, the reducing agent may also enter between the single strands and therefore reduce oxide layers on the strands in the wire receiving chamber.

As an additional or alternative embodiment of the invention, the assembly may comprise a binding screw having an inner bolt with an outer thread and having an outer bolt with an inner thread adapted to engage the outer thread and with a threaded section adapted to engage a threaded hole in the connector body at least partially forming the wire receiving chamber extending essentially perpendicularly to the central axis of the binding screw, wherein the inner bolt is provided with at least one predefined inner breaking point and that the outer bolt is provided with at least one predefined outer breaking point.

This solution has the decisive advantage over the prior art that an insertion depth of the binding screw into the receiving chamber may be freely chosen while the screw may be designed as required for a certain application. At the same time, the wire connection assembly comprising the screw and the connector body may be delivered in a pre-assembled state, where the screw is at least partly screwed into the connector body so that they are captively held together while arranged as required in relation to the receiving chamber. Providing both the inner bolt and the outer bolt with a breaking point allows for choosing driving and breaking torques of the screw as required by a certain application. At least the thread portion may be standardized and/or well established so that the screw may be applied to standardized and/or well established connector bodies.

The additional and/or alternative solution according to the invention can be combined as desired and further improved by the following further embodiments, which are advantageous on their own in each case:
According to a first further embodiment of a wire connection assembly according to the present invention, a distance between a lower end of the outer thread and a lower end or tip of the inner bolt measured essentially in parallel to the central axis may exceed a distance between an upper end of the inner thread and a lower end or rim of the outer bolt measured essentially in parallel to the central axis. The central axis may run essentially in parallel to an insertion direction for inserting the screw into the connector body and/or essentially perpendicularly to a longitudinal direction of the wire.

In the preassembled state, the lower end of the inner bolt and if desired also the lower end of the outer bolt may be located outside of the chamber, e.g. when a lowest thread helix of the inner bolt engages an uppermost thread helix of the outer bolt, so that the wire may be easily introduced into the chamber without the wire or at least some of its strands being kinked or stopped at the screw during introduction of the wire. Therefore, it is helpful that a distance between the outer thread and a tip of the inner bolt measured essentially in parallel to the central axis may exceed a distance between the inner thread and a rim of the outer bolt measured essentially in parallel to the central axis and/or the length of a guiding section of the outer bolt arranged below the inner thread. The guiding section may be arranged between an upper end of the inner thread and a lower end of the outer bolt and may serve for guiding a shaft section of the inner bolt arranged between the inner thread and the tip of the inner bolt. The tip may form the lower end of the inner bolt while the rim may form the lower end of the outer bolt. Thereby, in a fully engaged state, the inner breaking point may be located above the outer breaking point in a height direction of the assembly, so that the outer breaking point does not provide edges which protrude above the inner bolt and/or the connector body in a way that they could lead to damage or injury when providing e.g. an insulation layer around the connector body and handling the connector body, respectively. In other words, in a fully engaged state, the inner breaking point may be located above the outer breaking point in the height direction, i.e. in front of the outer breaking point in the insertion direction. Further, in the fully engaged state, the lower end of the inner bolt may jut underneath the lower end of the outer bolt, i.e. the tip may reach underneath the rim so that the inner bolt protrudes from the outer bolt in the insertion direction.

A stop for the inner bolt may be formed at the outer bolt. Thereby, e.g. the fully engaged state may be defined. The stop may be formed at the inner thread and/or the outer thread. For example, a stop of the inner bolt may be provided by the lower end of the outer thread. A stop at the outer bolt may be provided at a lower end of the inner thread.

The inner thread and the outer thread may essentially have the same length measured in parallel to the central axis. Thereby, a full insertion of the inner bolt into the outer bolt may be signalized in that the upper end of the outer thread and the upper end of the inner thread may be located essentially at the same height in the insertion direction when reaching the fully engaged state. However, in the fully engaged state, the inner breaking point and the outer breaking point may be located as desired along the central axis while above and/or below the inner breaking point and the outer breaking point, the outer thread and the inner thread are in engagement with each other.

A first torque, e.g. a pre-assembly torque, between the inner thread and the outer thread may be lower than a second torque, e.g. an insertion torque, between the threaded section and the threaded hole. Therefore, the inner and outer thread may be finer and/or less steep than the threaded section. This may also help in minimizing the wall thickness of the outer bolt. It may be assured that first a fully engaged state is achieved by fully inserting the inner bolt into the outer bolt and only afterwards the outer bolt is driven in order to transfer the screw into a final state. Also, a maximal insertion torque for breaking the inner breaking point may exceed a breaking torque for breaking the outer breaking point in order to break the inner bolt and the outer bolt in a defined sequence so that they first reach a fully inserted state and then the final state.

The outer breaking point may be located in an inner gap dividing the inner thread into an upper inner thread portion and a lower inner thread portion. The lower inner thread portion may be a first inner thread portion and the upper inner thread portion may be a second inner thread portion. Thereby, the forming of edges at the outer breaking point may be prevented because the thread is not broken upon shearing but upon exceeding the ultimate tensile strength of the outer breaking point.

The outer breaking point may be located in the vicinity of a lower end of the inner gap. Thereby, the inner breaking point may be moved along the inner gap with a certain tolerance while assuring that the outer breaking point always lies below the inner breaking point at least in the final state.

The inner breaking point may be located in an outer gap dividing the outer thread into an upper outer thread portion and a lower outer thread portion. The lower outer thread portion may be a first outer thread portion and the upper outer thread portion may be a second outer thread portion. Thereby, also the formation of edges at the inner breaking point may be prevented.

A length of the inner gap measured essentially in parallel to the central axis may exceed a length of the outer gap measured essentially in parallel to the central axis. Thereby, it may be provided that the upper outer thread portion is well engaged with the upper inner thread portion in any position along the insertion direction when the outer gap and the inner gap overlap.

A length of the lower outer thread portion measured essentially in parallel to the central axis may exceed a length of the lower inner thread portion measured essentially in parallel to the central axis. Thereby it can be assured, that at least in the final state, the outer breaking point is located below the inner breaking point. Further, a part of the outer thread remains accessible which may allow for removing the binding screw from the connector body after reaching the final state.

The inner bolt and the outer bolt together may form at least a part of a contact section of the binding screw. Hence, both the inner and the outer bolt may be used for establishing an electrical contact with the wire and/or for clamping the wire.

In the following, the invention and its improvements are described in greater detail using exemplary embodiments and with reference to the figures. As described above, the various features shown in the embodiments may be used independently of each other in specific applications.

In the following figures, elements having the same function and/or the same structure will be referenced by the same reference signs.

In the drawings:
- Fig. 1: shows a schematic sideview of a first advantageous embodiment of a binding screw according to the invention;
- Fig. 2: shows a schematic sideview of a second advantageous embodiment of a binding screw;
- Fig. 3: shows a schematic view of a wire connector assembly according to the invention along a longitudinal axis of the connector body in a pre-inserted state of the binding screw;
- Fig. 4: shows the assembly of Figure 3 in an inserted state of the binding screw;
- Fig. 5: shows a schematic view of a second advantageous embodiment of a connector body;
- Fig. 6: shows a schematic view of preferred dimensions of the wire receiving chamber and the contact section of the binding screw according to the invention.

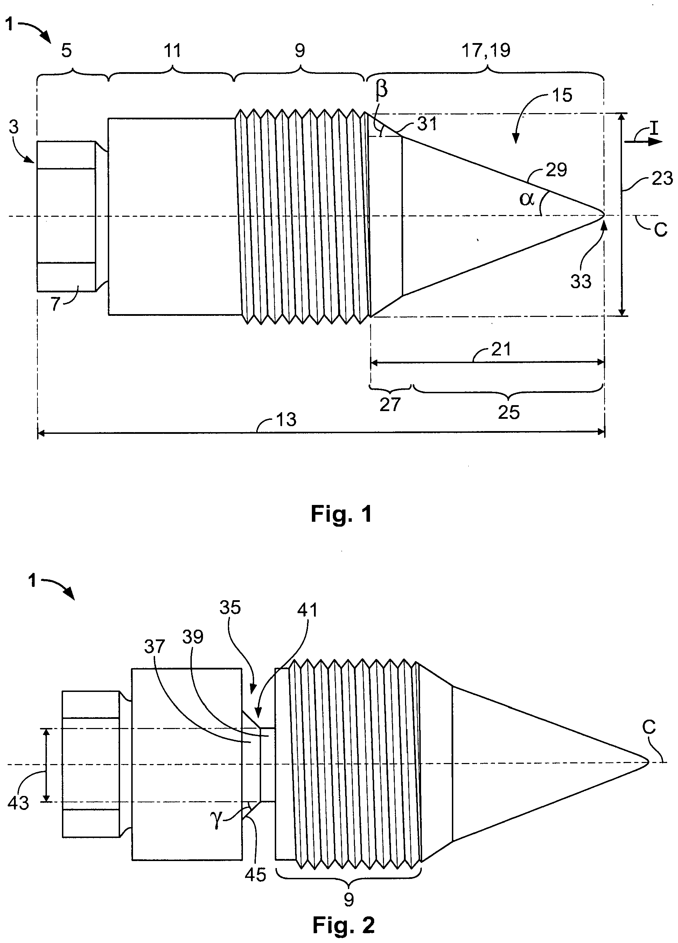

Figure 1 shows a schematic view of a first embodiment of a binding screw 1. The binding screw 1 can have an overall longitudinal shape along a central axis C. The binding screw 1 is insertable in an insertion direction I which runs parallel with the central axis C. Along the central axis C, the binding screw 1 can be subdivided into several sections which will be described hereafter. At a rear end 3, which faces away from the insertion direction I, the binding screw 1 comprises a driving section 5. The driving section can comprise a driving element 7, shaped as a screw nut as shown in Figure 1. However, the driving section 5 is not limited to driving element 7 formed as screw nuts. Any other applicable driving element 7, may be used for the binding screw 1 according to the invention. Just as an example, the driving section 5, may comprise a recess with a hexagonal shape for insertion of a complementary shaped driving tool.

The binding screw 1 comprises a threaded section 9. The threaded section 9 can be directly adjacent to the driving section 5. As shown in Figure 1, it is also possible to have a threaded section 9 which is spaced apart from the driving section 5 along the central axis C so that a body section 11 is formed. The body section 11 can be used to adjust the total length 13 of the binding screw 1. The threaded section 9 can be used to move the binding screw 1 into a wire receiving chamber of a connector body (not shown) upon applying a force on the driving section 5.

At a front end 15, the binding screw 1 comprises the contact section 17. The contact section 17 is intended to apply electrical contact with wire material, when the binding screw is inserted into a wire receiving chamber of a wire connection assembly.

The contact section 17 has a tapered penetration portion 19. In a preferred embodiment as shown in Figure 1, the tapered penetration portion 19 extends along the whole contact section 17. Alternatively, the contact section 17 may comprise a non-tapered section between the tapered penetration portion 19 and the threaded section 9.

The length 21 of the tapered penetration portion 19 is at least as large as ¾ of the diameter 23 of the binding screw 1 in the threaded section 9. The length 21 is preferably larger than the diameter 23. With such proportions, the tapered penetration portion 19 forms a sharp pointed front end 15. According to the invention, the tapered penetration portion 19 is subdivided into two sections:
A first conical section 25 and a second (frusto-) conical section 27. The first conical section 25 points in the insertion direction I. The second conical section 27 is arranged between the first conical section 25 and the threaded section 9. An angle α between a surface line 29 of the first conical section 25 and the central axis C is smaller than a point angle β between a surface line 31 of the second conical section 27 and the central axis C. The angle α in the first conical section 25 is preferably smaller than 30°, more preferably about 22°. If the whole tapered penetration portion 19 would have a continuous surface line 29 with a fixed angle α, the threaded section 9 would have to be placed further away from a tip 33 of the tapered penetration portion 19. Therefore, the second conical section 27 allows the arrangement of the threaded portion 9 closer to the tip 33 of the tapered penetration portion 19. This can help to allow the pre-installation of binding screws 1 according to the invention in a connector body without blocking the insertion of a cable or stranded wire into the connector body.

Figure 2 shows a second embodiment of a binding screw 1 according to the invention. In the following, only the differences to the embodiment described with respect to Figure 1 are explained.

The binding screw 1 is formed as a shear bolt and has a shear element 35 between the driving section 5 and the threaded section 9. The shear element has a third (frusto-) conical section 37 and a cylindrical section 39. A lower diameter end 41 of the third conical section 37 is facing towards the threaded section 9. The smaller diameter end 41 of the third conical section 37 is connected with the cylindrical section 39, and both share the diameter 43. The diameter 43 can be used to adjust the moment of force which is necessary to break the binding screw 1 apart at the shear element 35. The conical shape of the third conical section 37 is advantageous, since it causes the shear element 35 preferably to break in the cylindrical section 39. The angle y between a surface line 45 of the third conical section 37 and the central axis C is preferably around 45°. A smaller diameter 43 would lead to shearing of the shearing element 35 at a smaller moment of force compared to a binding screw 1 with a larger diameter 43.

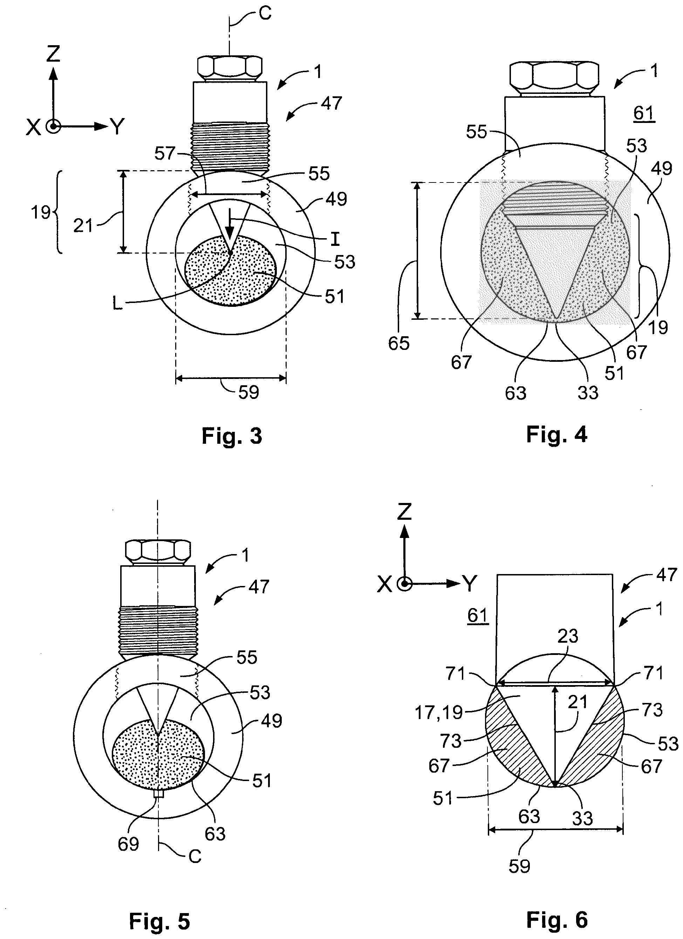

In Figure 3, a wire connection assembly 47 according to the invention is shown. The wire connection 47 comprises a binding screw 1 according to the invention and a connector body 49.

Figure 3 shows the wire connection assembly 47 schematically with a binding screw 1 prior to a full insertion and also just schematically with a cable formed by a stranded wire 51 inserted in a wire receiving chamber 53 of the connector body 49. For the sake of clarity, a coordinate system is shown in Figure 3. The central axis C of the binding screw 1 is parallel to the Z axis of the coordinate system. The same applies for the insertion direction I. The wire receiving chamber extends at least partially along a longitudinal axis L which runs parallel with the X axis of the coordinate system and therefore perpendicular to the central axis C. The longitudinal axis L preferably defines an insertion direction for the stranded wire 51.

The connector body 49 comprises a bore 55 which is internally threaded in a way that the threaded section 9 of the binding screw 1 can interact with the bore 55 such that the binding screw 1 can be screwed into the bore 55. By screwing the binding screw 1 into the bore 55, the contact section 17 can enter the wire receiving chamber 53. The bore 55 is centered around the central axis C.The bore diameter 57 is preferably smaller than an inner diameter 59 of the wire receiving chamber 53. The elements of the wire connection assembly 47 are preferably dimensioned such that the length 21 of the tapered penetration portion 19 of the binding screw 1 is at least as large as % of the inner diameter 59 of the wire receiving chamber. The length 21 is more preferably at least as large as ¾ of the inner diameter 59.

Figure 4 shows the wire connection assembly 47 on Figure 3 with the binding screw 1 in an inserted position 61. In order to reach the inserted position 61, the binding screw 1 was screwed into the bore 55 in the connector body 49 by rotating the driving section 5 so that the threaded section 9 interacts with the bore 55 and moves the binding screw 1 in the insertion direction I.

In the inserted position 61, the binding screw 1 extends over at least ¾ of the inner diameter 59 of the wire receiving chamber 53. Preferably, the binding screw 1 extends over at least 90% of the inner diameter 59 into the wire receiving chamber 53. Preferably, the tip 33 of the tapered penetration portion 19 gets in contact with the inner wall 63 of the wire receiving chamber 53 opposite to the bore 55 or gets in the close vicinity of the inner wall 63. In other words, a penetration depth 65 of the binding screw 1 in the wire receiving chamber 53 preferably approaches the inner diameter 59 of the wire receiving chamber 53.

In the inserted position 61, the single strands of the stranded wire 51 are mostly displaced by the tapered penetration portion 19 and are arranged into displacement areas 67 which are physically bordered by the tapered penetration portion 19 and the inner wall 63 of the wire receiving chamber 53.

Figure 5 shows a wire connection assembly 47 with a second embodiment of a connector body 49. In the following, only the differences between the second embodiment and the first embodiment, which is described with respect to Figures 3 and 4, are described.

The connector body 49 comprises an extension opening 69 in the inner wall 63 of the wire receiving chamber 53. The extension opening 69 is arranged opposite to the bore 55. Both, the bore 55 and the extension opening 69 are centered around the central axis C. The extension opening 69 is preferably formed as a blind hole. The extension opening 69 allows the usage of the same connector body 49 and binding screw 1 for different sizes of a stranded wire 51. In Figures 3 and 4, a stranded wire 51 is shown, that fills the displacement areas 67 when the binding screw 1 approaches the inner wall 63 with the tip 33. If, for example, a stranded wire 51 with a smaller cross section is used, the displacement areas 67 will not be fully filled with wire strands when the binding screw 1 is in an insertion position 61 as shown in Figure 4. When the displacement area 67 is not fully filled with strands, the stranded wire 51 is still loose in the wire receiving chamber 53 and therefore not fully connected and fixated.

The extension opening 69 allows the binding screw 1 to be screwed deeper into the wire receiving chamber 53. Therefore, more wire strands will be displaced by the tapered penetration portion 19 and the displacement areas 67 (not shown in Fig. 5) will be filled with strands. Therefore, an electrical contact between the binding screw 1 and the stranded wire 51 and also fixation of the stranded wire 51 in the connector body 49 can be achieved.

Figure 6 shows a schematic cross sectional view of a binding screw 1 with its contact section 17 in a wire receiving chamber 53. The shown cross section lies in the y-z-plane of the coordinate system. Figure 6 is intended to show preferred proportions of the elements of a wire connection assembly 47 according to the invention.

The inner diameter 59 of the wire receiving chamber 53 is preferably chosen to be larger than a diameter of a stranded wire 51 to be inserted into the wire receiving chamber 53. If, for example, the inner diameter 59 is 5 to 10% larger than a diameter of a stranded wire 51, the stranded wire 51 can easily be inserted into the wire receiving chamber 53.

The size of the tapered penetration portion 19 is preferably chosen such that the tip 33 reaches the inner wall 63 of the wire receiving chamber 53. Preferably, the contact section 17 is fully inserted in the wire receiving chamber 53, in a way that rear ends 71 of the contact section 17 are aligned with the inner wall 63 of the wire receiving chamber 53. The length 21 of the tapered penetration portion 19 and the diameter 23 of the binding screw are preferably chosen in such a way, that displacement areas 67 are formed, which are bordered by the surface 73 of the tapered penetration section 19 and the inner wall 63 of the wire receiving chamber 53. These displacement areas 67 have in sum an area which is equal to the cross section of the cable. This results in an optimal electrical contact between the binding screw 1, the stranded wire 51, and the connector body 49.

### REFERENCE SIGNS

- 1: Binding screw
- 3: Rear end
- 5: Driving section
- 7: Driving element
- 9: Threaded section
- 11: Body section
- 13: Total length
- 15: Front end
- 17: Contact section
- 19: Tapered penetration portion
- 21: Length of the tapered penetration portion
- 23: Diameter of binding screw
- 25: First conical section
- 27: Second conical section
- 29: Surface line
- 31: Surface line
- 33: Tip
- 35: Shear element
- 37: Third conical section
- 39: Cylindrical section
- 43: Diameter
- 45: Surface line
- 47: Lower diameter end
- 47: Wire connection assembly
- 49: Connector body
- 57: Stranded wire
- 53: Wire receiving chamber
- 55: Bore
- 57: Bore diameter
- 59: Inner diameter
- 61: Inserted position
- 63: Inner wall
- 65: Penetration depth
- 67: Displacement area
- 69: Extension opening
- 71: Rear end of contact section
- 73: Surface of the tapered penetration section

- C: Central axis
- I: Insertion direction
- α: Angle
- P: Angle
- y: Angle
- L: Longitudinal axis

## Claims

1. Binding screw (1) for a wire connection assembly (47), such as a spliced connector or a lug, especially for connecting flexible aluminum wires (51), comprising along a central axis C of the binding screw (1) a driving section (5), a threaded section (9), and a contact section (17) for establishing electrical contact with a stranded wire (51), wherein the contact section (17) has a tapered penetration portion (19), wherein a length (21) of the tapered penetration portion (19) is at least as large as ¾ of a diameter (23) of the binding screw (1) in the threaded section (9), **characterized in that** the tapered penetration portion (19) has a first conical section (25) with an angle α between a surface line (29) of the conical section (25) and the central axis C being less than 30°, and a second conical section (27) which is arranged between the first conical section (25) and the threaded section (9).

2. Binding screw (1) according to claim 1, **characterized in that** the length (21) of the tapered penetration portion (19) is at least as large as the diameter (23) of the binding screw (1) in the threaded section (9).

3. Binding screw (1) according to claim 1 or 2, **characterized in that** the binding screw (1) is formed as a shear bolt with a shear element (35) between the driving section (5) and the threaded section (9).

4. Binding screw (1) according to claim 3, **characterized in that** the shear element (35) has a third conical section (37) with a lower diameter end (41) facing towards the threaded section (9) and a cylindrical section (39) between said third conical section (37) and the threaded section (9).

5. Wire connection assembly (47) for stranded wires (51), especially for flexible aluminum wires, comprising a connector body (49) with at least one wire receiving chamber (53) and at least one bore (55) for a binding screw (1), the bore (55) being internally threaded and being opened into the wire receiving chamber (53), further comprising one binding screw (1) for the at least one bore (55), **characterized in that** the at least one binding screw (1) is formed according to one of the claims 1 to 4.

6. Wire connection assembly (47) according to claim 5, **characterized in that** the length (21) of the tapered penetration section (19) of the at least one binding screw (1) is at least as large as 2/3 of the inner diameter (59) of the wire receiving chamber (53).

7. Wire connection assembly (47) according to claim 6, **characterized in that**, in an inserted position (61) of the at least one binding screw (1), the binding screw (1) extends over at least ¾ of the inner diameter (59) of the wire receiving chamber (53) into the same.

8. Wire connection assembly (47) according to one of the claims 5 to 7, **characterized in that** an extension opening (69) for receiving the tapered penetration section (19) at least in parts is arranged in an inner wall (63) of the wire receiving chamber (53) opposite to the bore (55) of said binding screw (1).

9. Wire connection assembly (47), according to claim 8, **characterized in that** the extension opening (69) is formed as blind hole.

10. Wire connection assembly (47), according to one of the claims 5 to 9, **characterized in that** the inner diameter (59) of the wire receiving chamber (53) is larger than a bore diameter (57).

11. Wire connection assembly (47), according to one of the claims 5 to 10, **characterized in that** a reducing agent is provided on a surface (73) of the contact section (17) of the binding screw (1).

## Patentansprüche

1. Klemmschraube (1) für eine Drahtverbindungsanordnung (47), etwa eine gespleißte Steckverbindung oder eine Klemme, insbesondere zum Verbinden flexibler Aluminiumdrähte (51), die entlang einer Mittelachse C der Klemmschraube (1) einen Betätigungsabschnitt (5), einen Gewindeabschnitt (9) und einen Kontaktabschnitt (17) zum Einrichten eines elektrischen Kontakts mit einem Litzendraht (51) aufweist, wobei der Kontaktabschnitt (17) einen konischen Eindringbereich (19) aufweist, wobei eine Länge (21) des konischen Eindringbereichs (19) zumindest so groß ist wie 3/4 eines Durchmessers (23) der Klemmschraube (1) in dem Gewindeabschnitt (9), **dadurch gekennzeichnet, dass** der konische Eindringbereich (19) einen ersten konischen Abschnitt (25) mit einem Winkel α zwischen einer Oberflächenlinie (29) des konischen Abschnitts (25) und der Mittelachse C, der kleiner als 30° ist, und einen zweiten konischen Abschnitt (27) hat, der zwischen dem ersten konischen Abschnitt (25) und dem Gewindeabschnitt (9) angeordnet ist.

2. Klemmschraube (1) nach Anspruch 1, **dadurch gekennzeichnet, dass** die Länge (21) des konischen Eindringbereichs (19) mindestens so groß ist wie der Durchmesser (23) der Klemmschraube (1) in dem Gewindeabschnitt (9).

3. Klemmschraube (1) nach Anspruch 1 oder 2, **dadurch gekennzeichnet, dass** die Klemmschraube (1) als ein Scherbolzen mit einem Scherungselement (35) zwischen dem Betätigungsabschnitt (5) und dem Gewindeabschnitt (9) ausgebildet ist.

4. Klemmschraube (1) nach Anspruch 3, **dadurch gekennzeichnet, dass** das Scherungselement (35) einen dritten konischen Abschnitt (37) mit einem unteren Durchmesserende (41), das zu dem Gewindeabschnitt (9) zeigt, und einen zylindrischen Abschnitt (39) zwischen dem dritten konischen Abschnitt (37) und dem Gewindeabschnitt (9) aufweist.

5. Drahtverbindungsanordnung (47) für Litzendrähte (51), insbesondere für flexible Aluminiumdrähte, mit einem Steckverbindungskörper (49) mit mindestens einer Drahtaufnahmekammer (53) und mindestens einer Bohrung (55) für eine Klemmschraube (1), wobei die Bohrung (55) ein Innengewinde aufweist und sich in die Drahtaufnahmekammer (53) öffnet, und wobei ferner eine Klemmschraube (1) für die mindestens eine Bohrung (55) vorgesehen ist, **dadurch gekennzeichnet, dass** die mindestens eine Klemmschraube (1) nach einem der Ansprüche 1 bis 4 ausgebildet ist.

6. Drahtverbindungsanordnung (47) nach Anspruch 5, **dadurch gekennzeichnet, dass** die Länge (21) des konischen Eindringbereichs (19) der mindestens einen Klemmschraube (1) mindestens so groß wie zwei 2/3 des Innendurchmessers (59) Drahtaufnahmekammer (53) ist.

7. Drahtverbindungsanordnung (47) nach Anspruch 6, **dadurch gekennzeichnet, dass** in eingefügter Position (61) der mindestens einen Klemmschraube (1) die Klemmschraube (1) sich zumindest über 3/4 des Innendurchmessers (59) der Drahtaufnahmekammer (53) in diese hinein erstreckt.

8. Drahtverbindungsanordnung (47) nach einem der Ansprüche 5 bis 7, **dadurch gekennzeichnet, dass** eine Erweiterungsöffnung (69) zur Aufnahme des konischen Eindringbereichs (19) zumindest teilweise in einer Innenwand (63) der Drahtaufnahmekammer (53) gegenüberliegend zu der Bohrung (55) der Klemmschraube (1) angeordnet ist.

9. Drahtverbindungsanordnung (47) nach Anspruch 8, **dadurch gekennzeichnet, dass** die Erweiterungsöffnung (59) als Sackloch ausgebildet ist.

10. Drahtverbindungsanordnung (47) nach einem der Ansprüche 5 bis 9, **dadurch gekennzeichnet, dass** der Innendurchmesser (59) der Drahtaufnahmekammer (53) größer als ein Bohrungsdurchmesser (57) ist.

11. Drahtverbindungsanordnung (47) nach einem der Ansprüche 5 bis 10, **dadurch gekennzeichnet, dass** ein Reduziermittel auf einer Oberfläche (73) des Kontaktabschnitts (17) der Klemmschraube (1) vorgesehen ist.

## Revendications

1. Vis de serrage (1) pour ensemble raccord de fil (47), tel qu'un connecteur d'épissage ou une patte, spécialement pour raccorder des fils d'aluminium souples (51), comprenant le long d'un axe central C de la vis de serrage (1) une section de guidage (5), une section filetée (9), et une section de contact (17) pour établir un contact électrique avec un fil torsadé (51), où la section de contact (17) présente une partie de pénétration conique (19), où une longueur (21) de la partie de pénétration conique (19) est au moins aussi grande que les 3/4 d'un diamètre (23) de la vis de serrage (1) dans la section filetée (9), **caractérisée en ce que** la partie de pénétration conique (19) présente une première section conique (25) avec un angle α entre une ligne de surface (29) de la section conique (25) et l'axe central C étant inférieur à 30°, et une seconde section conique (27) qui est disposée entre la première section conique (25) et la section filetée (9).

2. Vis de serrage (1) selon la revendication 1, **caractérisée en ce que** la longueur (21) de la partie de pénétration conique (19) est au moins aussi grande que le diamètre (23) de la vis de serrage (1) dans la section filetée (9).

3. Vis de serrage (1) selon la revendication 1 ou 2, **caractérisée en ce que** la vis de serrage (1) est formée comme boulon de cisaillement avec un élément de cisaillement (35) entre la section de guidage (5) et la section filetée (9).

4. Vis de serrage (1) selon la revendication 3, **caractérisée en ce que** l'élément de cisaillement (35) présente une troisième section conique (37) avec une extrémité de diamètre inférieure (41) faisant face à la section filetée (9) et une section cylindrique (39) entre ladite troisième section conique (37) et la section filetée (9).

5. Ensemble raccord de fil (47) pour fils torsadés (51), spécialement pour fils d'aluminium souples, comprenant un corps de connecteur (49) avec au moins une chambre de réception de fil (53) et au moins un alésage (55) destiné à une vis de serrage (1), l'alésage (55) étant fileté au plan interne et étant ouvert dans la chambre de réception de fil (53), comprenant en outre une vis de serrage (1) pour le au moins un alésage (55), **caractérisé en ce que** la au moins une vis de serrage (1) est formée selon l'une quelconque des revendications 1 à 4.

6. Ensemble raccord de fil (47) selon la revendication 5, **caractérisé en ce que** la longueur (21) de la section de pénétration conique (19) de la au moins une vis de serrage (1) est au moins aussi grande que les 2/3 du diamètre interne (59) de la chambre de réception de fil (53).

7. Ensemble raccord de fil (47) selon la revendication 6, **caractérisé en ce que**, dans une position insérée (61) de la au moins une vis de serrage (1), la vis de serrage (1) s'étend sur au moins les 3/4 du diamètre interne (59) de la chambre de réception de fil (53) dans celle-ci.

8. Ensemble raccord de fil (47) selon l'une quelconque des revendications 5 à 7, caractérisé en ce **qu**'une ouverture d'extension (69) pour recevoir la section de pénétration conique (19) au moins dans des parties est disposée dans une paroi interne (63) de la chambre de réception de fil (53) opposée à l'alésage (55) de ladite vis de serrage (1).

9. Ensemble raccord de fil (47), selon la revendication 8, **caractérisé en ce que** l'ouverture d'extension (69) est formée comme trou borgne.

10. Ensemble raccord de fil (47), selon l'une quelconque des revendications 5 à 9, **caractérisé en ce que** le diamètre interne (59) de la chambre de réception de fil (53) est plus grand qu'un diamètre d'alésage (57).

11. Ensemble raccord de fil (47), selon l'une quelconque des revendications 5 à 10, **caractérisé en ce qu'**un agent de réduction est prévu sur une surface (73) de la section de contact (17) de la vis de serrage (1).
